# EUROPEAN PATENT APPLICATION

(11) **EP 4 397 436 A1**
(43) Date of publication of application: **10.07.2024**
(21) Application number: 22864077.7
(22) Date of filing: 19.07.2022
(51) Int. Cl.: B24B 13/00, B24B 9/14, B24B 13/01, B24B 55/02, B24D 11/00, G02C 7/02

(54) **METHOD FOR POLISHING SPECTACLE LENS, AND METHOD FOR MANUFACTURING SPECTACLE LENS**

(30) Priority: 03.09.2021 JP 2021143699
(71) Applicant: Hoya Lens Thailand Ltd., Pathumthani 12130 (TH)
(72) Inventor: SAMUKAWA, Masahiko, Tokyo 160-8347 (JP); OKUURA, Kazuteru, Tokyo 160-8347 (JP)
(74) Representative: Betten & Resch
(86) International application number: PCT/JP2022/027967
(87) International publication number: WO 2023/032489

(57) **Abstract**

A method for polishing a spectacle lens including a step of preparing a polishing pad provided with a flocking polishing sheet having a flocking part and abrasive grains that are attached to a surface of the flocking part on a polishing surface that comes into contact with a surface to be polished of a resin spectacle lens and a step of polishing the surface to be polished by bringing the surface to be polished into contact with the polishing surface by applying pressure and relatively moving the polishing pad and the spectacle lens while supplying a coolant to the polishing surface.

## Description

### [Technical Field]

The present invention relates to a method for polishing a spectacle lens and a method for manufacturing a spectacle lens.

### [Background Art]

For resin spectacle lenses, a method for manufacturing a spectacle lens by, for example, preparing a semi-finished lens in which the concave surface (external surface) side of a spectacle lens has been polished into an optical surface and polishing the internal surface side is known. In PTL 1, a manufacturing method in which an optical surface of a semi-finished lens having the optical surface on one surface and a non-optical surface on the other surface is polished to create an optical surface is proposed.

### [Citation List]

### [Patent Literature]

[PTL 1] Japanese Patent Application Publication No. 2012-187703

### [Summary of Invention]

### [Technical Problem]

An objective of one embodiment of the present invention is to provide a technique enabling a resin spectacle lens to be smoothly polished.

### [Solution to Problem]

A first aspect of the present invention is a method for polishing a spectacle lens including:
a step of preparing a polishing pad provided with a flocking polishing sheet having a flocking part and abrasive grains that are attached to a surface of the flocking part on a polishing surface that comes into contact with a surface to be polished of a resin spectacle lens; and
a step of polishing the surface to be polished by bringing the surface to be polished into contact with the polishing surface by applying pressure and relatively moving the polishing pad and the spectacle lens while supplying a coolant to the polishing surface.

A second aspect of the present invention is the method for polishing a spectacle lens according to the first aspect, in which, in the step of preparing the polishing pad, the polishing pad provided with the flocking polishing sheet is prepared on a base material containing an elastic material.

A third aspect of the present invention is the method for polishing a spectacle lens according to the first or second aspect,
in which, in the polishing step, the polishing pad and the spectacle lens are relatively moved so that the abrasive grains swing in a direction parallel to the polishing surface and a direction intersecting with the polishing surface.

A fourth aspect of the present invention is the method for polishing a spectacle lens according to any one of the first to third aspects,
in which, in the polishing step, a slurry containing abrasive grains is not supplied to the polishing surface.

A fifth aspect of the present invention is the method for polishing a spectacle lens according to any one of the first to fourth aspects,
in which, in the polishing step, a temperature of the coolant is controlled to be 20 degrees or lower.

A sixth aspect of the present invention is the method for polishing a spectacle lens according to any one of the first to fifth aspects,
in which, in the step of preparing the polishing pad, a polishing pad provided with a flocking polishing sheet having abrasive grains having an average grain diameter of 0.5 um or more and 5 um or less is prepared.

A seventh aspect of the present invention is a method for manufacturing a spectacle lens including:
a step of preparing a polishing pad provided with a flocking polishing sheet having a flocking part and abrasive grains that are attached to a surface of the flocking part on a polishing surface that comes into contact with a surface to be polished of a resin spectacle lens; and
a step of polishing the surface to be polished by bringing the surface to be polished into contact with the polishing surface by applying pressure and relatively moving the polishing pad and the spectacle lens while supplying a coolant to the polishing surface.

### [Advantageous Effects of Invention]

According to one embodiment of the present invention, it is possible to smoothly polish a resin spectacle lens.

### [Brief Description of Drawings]

[Fig. 1]

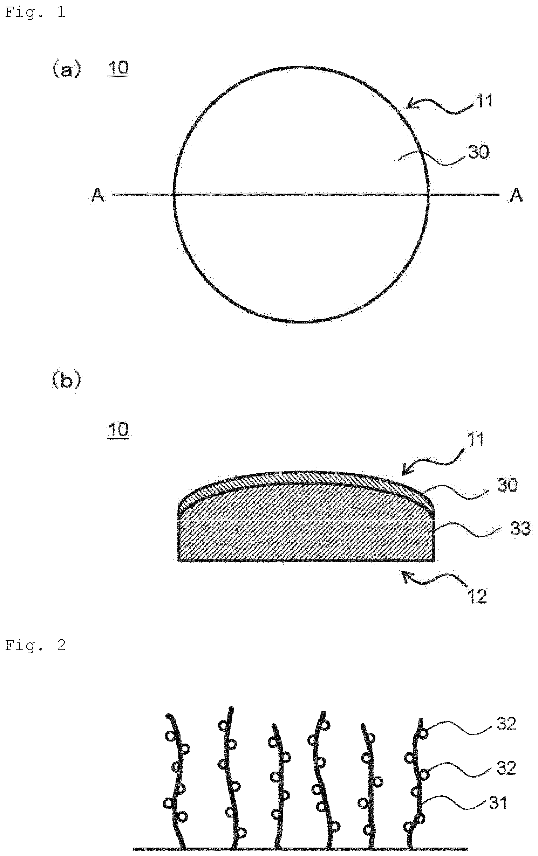

   Fig. 1(a) is a plan view schematically showing an example of a polishing surface 11 of a polishing pad 10 of a first embodiment of the present invention, and Fig. 1(b) is a schematic cross-sectional view along a line A-A in Fig. 1(a).
[Fig. 2]
   Fig. 2 is an enlarged schematic view of a flocking polishing sheet 30 provided on the polishing surface 11 of the first embodiment of the present invention.
[Fig. 3]

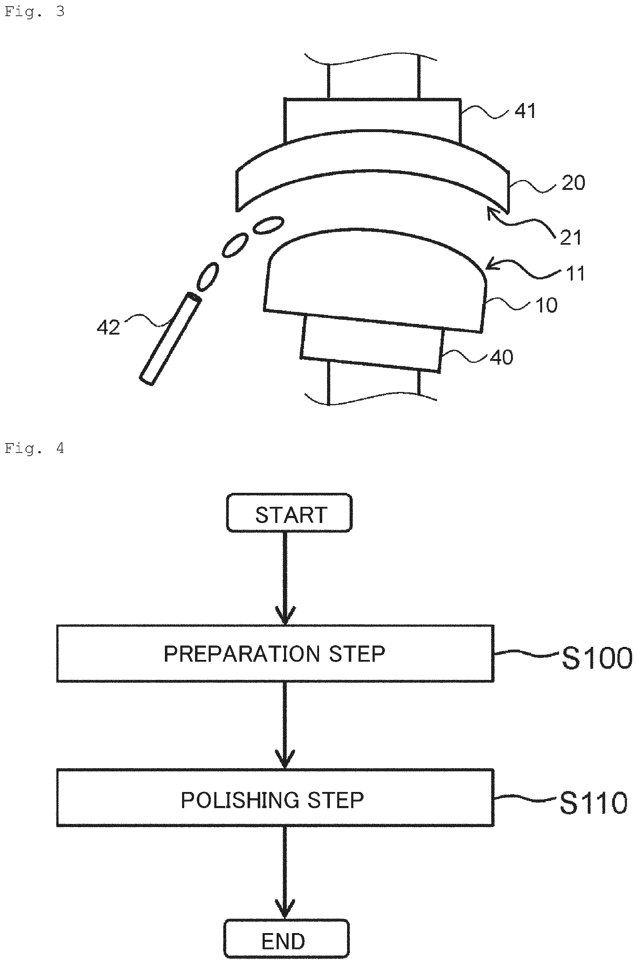

   Fig. 3 is a schematic configuration view showing an example of a polishing device that is used in the first embodiment of the present invention.
[Fig. 4]
   Fig. 4 is a flowchart showing an example of a method for polishing a spectacle lens 20 of the first embodiment of the present invention.

### [Description of Embodiments]

### <Knowledge that inventors obtained>

First, knowledge that the inventors obtained will be described.

In conventional polishing methods described in PTL 1 and the like, polishing is performed while supplying a slurry containing abrasive grains. At this time, there is a concern that a polishing liquid may scatter and be attached to a movable part in a polishing device, which causes early wear of a component and causes a malfunction or a breakdown. Therefore, the load of cleaning or maintenance becomes large. Particularly, the polishing liquid solidifies after being dried, and thus washing is not easy.

The inventors studied the above-described problem and developed a polishing method in which a slurry is not supplied. First, the inventors attempted to polish a spectacle lens using a polishing sheet to which abrasive grains were fixed. However, when the grain diameters of the abrasive grains were 0.5 um or more, the polishing power was too large, and the spectacle lens was thus scratched. In addition, in a case where the grain diameters of the abrasive grains were further decreased, the polishing power was small, and it was not possible to smoothly polish the spectacle lens. In the present specification, a spectacle lens being smoothly polished indicates that the spectacle lens is polished so that, for example, the maximum cross-sectional height Rt (refer to JIS B 0601-2001) of a surface to be polished reaches 0.07 or less. The maximum cross-sectional height Rt of the surface to be polished is more preferably 0.06 or less and still more preferably 0.05 or less. Examples of the index of surface roughness that is regulated in JIS B 0601-2001 include, aside from the maximum cross-sectional height Rt, for example, an arithmetic average roughness Ra and the like. In the present specification, an objective is to compare the polishing powers of polishing pads using the absolute heights of unevenness of surfaces to be polished, and the maximum cross-sectional height Rt will be used.

Next, the inventors attempted to polish a spectacle lens using a polishing pad provided with a flocking polishing sheet on a polishing surface. The flocking polishing sheet is a polishing sheet having a flocking part in which a large number of fine cut piles are embedded and abrasive grains that are attached to the flocking part, and specifically, for example, WA3000-FB GEY-A 5 um manufactured by Mipox Corporation can be used. However, in a case where a thermosetting resin spectacle lens was polished, the lens shape deteriorated, and the standards of the lens prescription (for example, the error of the spherical equivalent was within ±0.06D) were not satisfied. In addition, in a case where a thermoplastic resin spectacle lens was polished, it was not possible to smoothly polish the spectacle lens.

Flocking polishing sheets do not require the joint use of a coolant, a compound or the like and can be processed in a dry manner, and polishing pads provided with a flocking polishing sheet can thus be used for dry polishing. However, as a result of additional studies, the inventors found that a resin spectacle lens can be smoothly polished by performing polishing using a polishing pad provided with a flocking polish sheet on a polishing surface while supplying a coolant to the polishing surface. According to this method, it is possible to perform polishing without supplying a slurry, and a cause of the breakdown of a polishing device is thus eliminated. In addition, there is no need to exchange, supplement and manage slurries, and maintenance is also easy, and there is thus a merit in terms of the cost.

### [Details of embodiments of present invention]

Next, one embodiment of the present invention will be described with reference to the following drawings. The present invention is not limited to these examples and is shown by the scope of claims, and it is intended to encompass equivalents to and all modifications within the scope of the claims.

### <First embodiment of present invention> (1) Configuration of polishing pad 10

First, the configuration of a polishing pad 10 of the present embodiment will be described. In the present embodiment, a case where a surface (hereinafter, also referred to as the surface to be polished 21) of a resin spectacle lens 20 is polished using the polishing pad 10 will be described. The spectacle lens 20 of the present embodiment may be, for example, a fixed-focus lens or may be a progressive power lens including a part where the refractive power continuously changes (progressive zone). The surface to be polished 21 of the spectacle lens 20 may be, for example, a convex surface (object-side surface) or may be a concave surface (eyeball-side surface).

The polishing pad 10 is used for the polishing of the surface to be polished 21 of the spectacle lens 20. In the present specification, between the main surfaces of the polishing pad 10, a surface that comes into contact with the surface to be polished 21 of the spectacle lens 20 will be referred to as "polishing surface 11," and a surface opposite to the polishing surface 11 will be referred to as "rear surface 12."

Fig. 1(a) is a plan view schematically showing an example of the polishing surface 11 of the polishing pad 10 of the present embodiment, and Fig. 1(b) is a schematic cross-sectional view along a line A-A in Fig. 1(a). As shown in Fig. 1(a) and Fig. 1(b), the polishing pad 10 of the present embodiment is provided with a flocking polishing sheet 30 on the polishing surface 11.

The polishing surface 11 of the polishing pad 10 preferably has, for example, a circular shape having a diameter of 30 mm or more and 100 mm or less in a plan view. In such a case, it becomes easy to polish the entire surface to be polished 21 of an ordinary spectacle lens 20 having a diameter of 60 mm or more. In addition, the polishing surface 11 may be a convex curved surface as shown in Fig. 1(b) or may be a flat surface. In a case where the surface to be polished 21 is a concave surface, the polishing surface 11 is preferably a convex curved surface to make it difficult for a gap to be generated between the polishing surface 11 and the surface to be polished 21.

Fig. 2 is an enlarged schematic view of the flocking polishing sheet 30 provided on the polishing surface 11. As shown in Fig. 2, the flocking polishing sheet 30 has flocking parts 31 in which a large number of fine cut piles (fibers) are embedded and abrasive grains 32 that are attached to the flocking parts 31. As the flocking polishing sheet 30, for example, WA3000-FB GEY-A manufactured by Mipox Corporation can be used.

As the fibers in the flocking part 31, for example, fibers made of nylon, polypropylene, polyethylene, polyethylene terephthalate, polyurethane, acryl, polyvinyl chloride, vinylon or rayon, glass fibers, carbon fibers, metal fibers and the like can be used. The thickness of the fiber is, for example, 20 um or more and 100 um or less (more preferably 30 um or more and 80 um or less), and the length is 0.2 mm or more and 0.8 mm or less (more preferably 0.3 mm or more and 0.6 mm or less). When the fibers are thicker or shorter than the above-described ranges, there is a possibility that elasticity may lack. On the other hand, in a case where the fibers are thinner or longer than the above-described ranges, the fibers entangle, and it becomes difficult to apply a uniform pressure between the polishing surface 11 and the surface to be polished 21 or it becomes difficult to secure the free movement of the abrasive grains 32 during polishing.

As the abrasive grains 32, for example, silicon carbide, diamond, aluminum oxide or the like can be used. As an adhesive for attaching the abrasive grains 32 to the surface of the flocking parts 31, for example, a polyester resin, a polyurethane resin, a copolymer vinyl resin, an epoxy resin, a phenolic resin, an adhesive obtained by reacting a mixture thereof with a curing agent or the like can be used.

The thickness of the flocking polishing sheet 30 is, for example, preferably 0.5 mm or more. In such a case, it is possible to improve the durability of the flocking polishing sheet 30. In a case where the thickness of a commercially available flocking polishing sheet 30 is less than 0.5 mm, the flocking polishing sheet 30 may be used after, for example, a base material such as a nonwoven fabric (hereinafter, also referred to as an auxiliary base material) is stuck thereto. The upper limit of the thickness of the flocking polishing sheet 30 is not particularly limited and is, for example, 5 mm or less. The auxiliary base material contributes to the maintenance of buffering properties and cushioning properties during polishing together with an elastic base material 33.

The average grain diameter (D50) of the abrasive grains 32 is preferably set to, for example, 0.5 um or more and 5 um or less. When the average grain diameter of the abrasive grains 32 is less than 0.5 um, the polishing power is small, and there is a possibility that the polishing time may become too long. In contrast, when the average grain diameter of the abrasive grains 32 is set to 0.5 um or more, it is possible to appropriately increase the polishing power and to shorten the polishing time. On the other hand, when the average grain diameter of the abrasive grains 32 exceeds 5 um, there is a possibility that it may not be possible to smoothly polish the spectacle lens 20. In contrast, when the average grain diameter of the abrasive grains 32 is set to 5 um or less, it becomes easy to smoothly polish the spectacle lens 20.

As shown in Fig. 1(b), the flocking polishing sheet 30 is preferably provided on the elastic base material 33. The elastic base material 33 contains an elastic material such as a sponge and is thereby capable of elastically transforming the polishing pad 10 in a direction intersecting with the polishing surface 11. An effect of such a capability will be described below. The thickness of the elastic base material 33 is not particularly limited, but the elastic base material 33 is preferably configured so that the polishing pad 10 can be elastically transformed in the direction intersecting with the polishing surface 11 in a range of 80 mm or more and 100 mm or less when the polishing surface 11 has been brought into contact with the surface to be polished 21 by applying a pressure of 50 kPa thereto.

### (2) Method for polishing spectacle lens 20

Next, a method for polishing the spectacle lens 20 using the polishing pad 10 of the present embodiment will be described. In the present embodiment, a case where the concave surface of the resin spectacle lens 20 is the surface to be polished 21 will be described. In the following description, for the contents not described in the present specification, a publicly known technique may be used.

Fig. 3 is a schematic configuration view showing an example of a polishing device that is used in the present embodiment. As shown in Fig. 3, the polishing device of the present embodiment has, for example, a pad holder 40, a lens holder 41 and a coolant supply part 42.

The pad holder 40 is, for example, a metal (stainless steel or the like) member and is configured to be capable of fixing the polishing pad 10 to the upper surface. The polishing pad 10 may be fixed to the pad holder 40 using, for example, a stainless steel band or the like. The pad holder 40 is configured to rotate in the horizontal direction at a predetermined rotational speed in a state of fixing the polishing pad 10 to the upper surface. In addition, the pad holder 40 is preferably configured to turn, for example, at a swing angle of 40 degrees or less with respect to the rotary axis of the rotation in a state of fixing the polishing pad 10 to the upper surface. This makes it easy to polish the entire surface to be polished 21 in a case where the surface to be polished 21 is the concave surface.

The lens holder 41 is, for example, a metal (stainless steel or the like) member and is configured to be capable of fixing the spectacle lens 20 on the lower side. At the time of fixing the spectacle lens 20, it is preferable to closely attach a protective film for scratch prevention to a surface opposite to the surface to be polished 21 (the convex surface in the present embodiment). The lens holder 41 is configured to move up and down in the vertical direction in a state of fixing the spectacle lens 20 on the lower side. In addition, the lens holder 41 is configured to press the surface to be polished 21 against the polishing surface 11 of the polishing pad 10 at a predetermined pressure.

The coolant supply part 42 is configured to supply a coolant to the polishing surface 11 of the polishing pad 10. As the coolant, for example, water, grinding oil or polishing oil can be used. The coolant supply part 42 is preferably configured to collect the coolant supplied to the polishing surface 11 and to be capable of filtering polishing waste or the abrasive grains 32 or the like that have dropped from the polishing pad 10 and then supplying the abrasive grains or the like to the polishing surface 11 again. In addition, the coolant supply part is preferably provided with a chiller to control the temperature of the coolant.

Fig. 4 is a flowchart showing an example of the method for polishing the spectacle lens 20 of the present embodiment. As shown in Fig. 4, the method for polishing the spectacle lens 20 of the present embodiment has, for example, a preparation step S100 and a polishing step S110.

### (Preparation step S100)

In the preparation step S100, the polishing pad 10 and the spectacle lens 20 are prepared. In the present embodiment, a thiourethane resin semi-finished lens is prepared as the spectacle lens 20. The maximum cross-sectional height Rt of the surface to be polished 21 before polishing, which has been cut with a curve generator, is, for example, 0.2 um or more and 0.6 um or less. The spectacle lens 20 is fixed to the lens holder 41, and the polishing pad 10 is fixed to the pad holder 40.

In the preparation step S100, it is preferable to prepare the polishing pad 10 provided with the flocking polishing sheet 30 on the elastic base material 33. This makes it possible to elastically transform the polishing pad 10 in the direction intersecting with the polishing surface 11 in the polishing step S110, which will be described below. When it is possible to elastically transform the polishing pad 10 in the direction intersecting with the polishing surface 11, it becomes easy to swing the abrasive grains 32 in the direction intersecting with the polishing surface 11, and it becomes possible to smoothly polish the surface to be polished 21 of the spectacle lens 20.

In the preparation step S100, it is preferable to prepare the polishing pad 10 provided with the flocking polishing sheet 30 having the abrasive grains 32 having an average grain diameter (D50) of 0.5 um or more and 5 um or less. The reason therefor is as described in (1) the configuration of the polishing pad 10. In the preparation step S100, a plurality of polishing pads 10 having different average grain diameters of the abrasive grains 32 may be prepared.

### (Polishing step S110)

In the polishing step S110, the surface to be polished 21 of the spectacle lens 20 is polished using the polishing pad 10 and the above-described polishing device. In the polishing step S110, the surface to be polished 21 is polished by bringing the surface to be polished 21 into contact with the polishing surface 11 by applying a pressure thereto and relatively moving the polishing pad 10 and the spectacle lens 20 while supplying the coolant to the polishing surface 11.

In the polishing step S110, the surface to be polished 21 is pressed against the polishing surface 11 at a predetermined pressure by, for example, moving the lens holder 41 up and down in the vertical direction. The pressure that is applied between the polishing surface 11 and the surface to be polished 21 (polishing pressure) is preferably set to, for example, 10 kPa or higher and 100 kPa or lower. In addition, the surface to be polished 21 is preferably pressed against the polishing surface 11 so that the pressure is uniformly applied to the surface to be polished 21. This makes it possible to polish the surface to be polished 21 of the spectacle lens 20 uniformly in the surface.

In the polishing step S110, for example, the pad holder 40 is rotated in the horizontal direction, and the polishing pad 10 and the spectacle lens 20 are relatively moved at a predetermined rotational speed. The relative rotational speed between the polishing pad 10 and the spectacle lens 20 is, for example, preferably set to 200 rpm or faster and 1000 rpm or slower. The lens holder 41 may be rotated instead of the pad holder 40 or the pad holder 40 and the lens holder 41 may be each rotated.

In the polishing step S110, polishing is performed while supplying the coolant to the polishing surface 11 using, for example, the coolant supply part 42. This suppresses the deterioration of the lens shape caused by friction heat and makes it possible to smoothly polish the surface to be polished 21 of the spectacle lens 20. In addition, in the polishing step S110, it is preferable to collect the coolant supplied to the polishing surface 11 and to filter polishing waste or the abrasive grains 32 or the like that have dropped from the polishing pad 10.

In the polishing step S110, it is preferable to control the temperature of the cooler to 20 degrees or lower using, for example, the chiller provided in the coolant supply part 42. When the temperature of the coolant exceeds 20 degrees, there is a possibility that the lens shape may deteriorate due to friction heat. In contrast, when the temperature of the coolant is controlled to be 20 degrees or lower, the deterioration of the lens shape is suppressed, and it becomes easy to smoothly polish the surface to be polished 21 of the spectacle lens 20. The lower limit of the temperature of the coolant is not particularly limited, but the temperature is preferably controlled to be, for example 15 degrees or higher from the viewpoint of easiness in control.

In the polishing step S110, it is preferable to relatively move the polishing pad 10 and the spectacle lens 20 so that the abrasive grains 32 swing in a direction parallel to the polishing surface 11 and the direction intersecting with the polishing surface 11. For example, in a polishing method in which a polishing sheet in which abrasive grains 32 are fixed is used (fixed abrasive grain type), since the abrasive grains 32 do not swing, a large force is locally applied, and it is not possible to smoothly polish the surface to be polished 21. In contrast, in the present embodiment, since the abrasive grains 32 are attached to the surfaces of the flocking parts 31, it is easy for the abrasive grains 32 to swing in a plurality of directions as described above. Therefore, the application of a local force to the surface to be polished 21 is avoided, and it becomes possible to smoothly polish the surface to be polished 21.

In the polishing step S110, it is preferable not to supply a slurry to the polishing surface 11. In the polishing method of the present embodiment, since no slurry is used, the polishing device is less likely to become dirty, maintenance becomes easy, and the service life of the polishing device can be improved. In addition, it is possible to reduce the cost for the supply or disposal of slurries. In addition, it is possible to reduce misses at the time of attaching and detaching the spectacle lens 20 or the polishing pad 10 to and from the polishing device. In addition, in ordinary slurries, the pH is adjusted to be acidic (for example, a pH of 3 or higher and 4 or lower) to increase the dispersibility of abrasive grains (for example, alumina abrasive grains). In contrast, in the polishing method of the present embodiment, since no slurry is used, it is possible to perform polishing in a neutral region (for example, a pH of 6 or higher and 8 or lower). Therefore, it becomes possible to reduce the deterioration of the polishing device.

In the polishing step S110, it is preferable to perform polishing using the polishing pad 10 in which the average grain diameter of the abrasive grains 32 is large (for example, 3 um or more and 5 um or less) for a predetermined time from the beginning of the polishing and then perform polishing using the polishing pad 10 in which the average grain diameter of the abrasive grains 32 is small (for example, 0.5 um or more and less than 3 um). In such a case, it becomes possible to more smoothly polish the surface to be polished 21. In addition, three or more stages of polishing may be performed while changing the average grain diameter of the abrasive grains 32. For example, it is possible to perform polishing using the polishing pad 10 in which the average grain diameter of the abrasive grains 32 is large (for example, 3 um or more and 5 um or less) and then selectively use the polishing pad 10 in which the average grain diameter of the abrasive grains 32 is small (for example, 2 um or more and less than 3 um) and, furthermore, use the abrasive grains 32 having a small average grain diameter (0.5 um or more and less than 2 um) or the like. In the polishing step S110, the time during which polishing is performed (polishing time) is preferably set to a total of 15 minutes or shorter and more preferably 10 minutes or shorter. The grain diameter of the abrasive grain 32 or the polishing time that is applied to the polishing step S110 can be determined from the viewpoint of smoothness specification and productivity that are required in each product.

The spectacle lens 20 having the smoothly polished surface to be polished 21 can be obtained by the above-described steps. The present invention can also become a method for manufacturing the spectacle lens 20 aside from the method for polishing the spectacle lens 20. A step other than the above-mentioned steps may be appropriately added as necessary.

### <Other embodiments of present invention>

Hitherto, the embodiment of the present invention has been specifically described, but the present invention is not limited to the foregoing embodiment and can be modified in a variety of manners without departing from the gist of the present invention.

For example, in the above-described embodiment, a case where mainly the concave surface of the spectacle lens 20 is polished has been described, but the present invention can also be applied to a case where the convex surface of the spectacle lens 20 is polished in the same manner.

### [Examples]

Next, examples according to the present invention will be described. These examples are simply examples of the present invention, and the present invention is not limited by these examples.

### (1) Preparation of polishing pad 10 and spectacle lens 20

First, samples 1 to 10 (semi-finished lenses) of the spectacle lens 20 were prepared as described below. The maximum cross-sectional heights Rt of the surfaces to be polished 21 before polishing, which had been cut with a curve generator, were 0.2 um or more and 0.6 um or less. The samples 2 and 3 were made of a polycarbonate resin, and the other samples were made of a thiourethane resin, which is a thermosetting resin.

Three kinds of polishing pads 10 were prepared using WA3000-FB GEY-A's (0.5 um, 2 um and 5 um) manufactured by Mipox Corporation as the flocking polishing sheet 30. In addition, for comparison, polishing pads in which fixed abrasive grain-type polishing sheets (diamond abrasive grains, average grain diameters: 0.1 um, 0.3 um and 2 um) were used were prepared.

### (2) Polishing of spectacle lens 20

The sample 1 was polished using the polishing pad 10 having an average grain diameter of 5 um without supplying a coolant. The polishing pressure was set to 50 kPa, the polishing time was set to three minutes, and the relative rotational speed between the polishing pad 10 and the spectacle lens 20 was set to 500 rpm.

The sample 2 was polished in the same manner as the sample 1.

The sample 3 was polished while supplying a coolant to the polishing surface 11. As the coolant, water was used, and the temperature of the coolant was controlled to be 16 degrees or higher and 20 degrees or lower. The other conditions were set to be the same as those for the sample 1.

The sample 4 was polished using the fixed abrasive grain-type (average grain diameter: 0.1 um) polishing pad while supplying water to the polishing surface 11. The polishing pressure was set to 25 kPa, the polishing time was set to three minutes, and the relative rotational speed was set to 500 rpm.

The sample 5 was polished using the fixed abrasive grain-type (average grain diameter: 0.3 um) polishing pad. The other conditions were set to be the same as those for the sample 4.

The sample 6 was polished using the fixed abrasive grain-type (average grain diameter: 2 um) polishing pad. The other conditions were set to be the same as those for the sample 4.

The sample 7 was polished using the polishing pad 10 having an average grain diameter of 5 um while supplying a coolant to the polishing surface 11. As the coolant, water was used, and the temperature of the coolant was controlled to be 16 degrees or higher and 20 degrees or lower. The polishing pressure was set to 50 kPa, the polishing time was set to two minutes, and the relative rotational speed was set to 500 rpm.

The sample 8 was polished for two minutes using the polishing pad 10 having an average grain diameter of 5 um while supplying a coolant to the polishing surface 11 and then polished for three minutes using the polishing pad 10 having an average grain diameter of 2 um while supplying a coolant to the polishing surface 11. The other conditions were set to be the same as those for the sample 7.

The sample 9 was polished for two minutes using the polishing pad 10 having an average grain diameter of 5 um while supplying a coolant to the polishing surface 11 and then polished for nine minutes using the polishing pad 10 having an average grain diameter of 0.5 um while supplying a coolant to the polishing surface 11. The other conditions were set to be the same as those for the sample 7.

The sample 10 was polished for two minutes using the polishing pad 10 having an average grain diameter of 5 um while supplying a coolant to the polishing surface 11 and then polished for five minutes using the polishing pad 10 having an average grain diameter of 2 um while supplying a coolant to the polishing surface 11. The other conditions were set to be the same as those for the sample 7.

### (3) Evaluation of polishing power

From the polished samples 1 to 10, the maximum cross-sectional heights Rt of the surfaces to be polished 21 were measured using a three-dimensional measuring instrument. The results are shown in Table 1.

**[Table 1]**

| Sample | Spectacle lens | Polishing pad (grain diameter of abrasive grain) | Coolant | Polishing pressure | Polishing time | Relative rotational speed | Maximum cross-sectional height |
|---|---|---|---|---|---|---|---|
| 1 | Thiourethane | Flocking polishing sheet (5µm) | No | 50kPa | 3min | 500rpm | 0.0882 |
| 2 | Polycarbonate | Flocking polishing sheet (5µm) | No | 50kPa | 3min | 500rpm | 2.4403 |
| 3 | Polycarbonate | Flocking polishing sheet (5µm) | Yes | 50kPa | 3min | 500rpm | 0.0362 |
| 4 | Thiourethane | Fixed abrasive grain type (0.1µm) | | 25kPa | 3min | 500rpm | 0.321.0 |
| 5 | Thiourethane | Fixed abrasive grain type (0.3µm) | | 25kPa | 3min | 500rpm | 0.2223 |
| 6 | Thiourethane | Fixed abrasive grain type (2µm) | | 25kPa | 3min | 500rpm | 0.2687 |
| 7 | Thiourethane | Flocking polishing sheet (5µm) | Yes | 50kPa | 2min | 500rpm | 0.0685 |
| 8 | Thiourethane | Flocking polishing sheet (5µm,2µm) | Yes | 50kPa | 2min+3min | 500rpm | 0.0584 |
| 9 | Thiourethane | Flocking polishing sheet (5µm,0.5µm) | Yes | 50kPa | 2min+9min | 500rpm | 0.0615 |
| 10 | Thiourethane | Flocking polishing sheet (5µm,2µm) | Yes | 50kPa | 2min+5min | 500rpm | 0.0514 |

For the sample 1 polished without supplying a coolant, the maximum cross-sectional height Rt of the surface to be polished 21 was 0.0882, which failed to satisfy the standard (Rt was 0.07 or less) of the present specification. In addition, as a result of measurement with a lens meter, the standards of the lens prescription (the error of the spherical equivalent was within ±0.06D) were not satisfied.

In addition, for the sample 2 polished without supplying a coolant, the maximum cross-sectional height Rt of the surface to be polished 21 was 2.4403, which failed to satisfy the standard of the present specification. The measurement of the lens prescription was not possible.

In contrast, for the sample 3 polished while supplying the coolant to the polishing surface 11, the maximum cross-sectional height Rt of the surface to be polished 21 was 0.0362, which satisfied the standard of the present specification. In addition, the measurement result of the lens prescription with the lens meter was also within the standard. From what has described above, it was confirmed that, when polishing is performed using the polishing pad 10 provided with the flocking polishing sheet 30 on the polishing surface 11 while supplying a coolant to the polishing surface 11, it is possible to smoothly polish the surface to be polished 21 of the resin spectacle lens 20.

For the samples 4 to 6 polished using the fixed abrasive grain-type polishing pads, the maximum cross-sectional heights Rt of the surfaces to be polished 21 all failed to satisfy the standard of the present specification. In addition, the lens surfaces were so white turbid that the roughness thereof was visible.

For the samples 7 to 10 polished while supplying the coolant to the polishing surfaces 11, the maximum cross-sectional heights Rt of the surfaces to be polished 21 all satisfied the standard of the present specification. In addition, for the samples 8 to 10 for which the plurality of polishing pads 10 having different average grain diameters of the abrasive grains 32 were used, polishing was performed using the polishing pad 10 having a large average grain diameter of the abrasive grains 32 for a predetermined time from the beginning of the polishing and then polishing was performed using the polishing pad 10 having a small average grain diameter of the abrasive grains 32, the maximum cross-sectional heights Rt of the surfaces to be polished 21 were smaller than that of the sample 7 polished using one polishing pad 10. From what has described above, it was confirmed that the surface to be polished 21 can be more smoothly polished by performing polishing using the polishing pad 10 having a large average grain diameter of the abrasive grains 32 for a predetermined time from the beginning of the polishing and then performing polishing using the polishing pad 10 having a small average grain diameter of the abrasive grains 32.

### [Reference Signs List]

- 10: Polishing pad
- 11: Polishing surface
- 12: Rear surface
- 20: Spectacle lens
- 21: Surface to be polished
- 30: Flocking polishing sheet
- 31: Flocking part
- 32: Abrasive grain
- 33: Elastic base material
- 40: Pad holder
- 41: Lens holder
- 42: Coolant supply part
- S100: Preparation step
- S110: Polishing step

## Claims

1. A method for polishing a spectacle lens comprising:
a step of preparing a polishing pad provided with a flocking polishing sheet having a flocking part and abrasive grains that are attached to a surface of the flocking part on a polishing surface that comes into contact with a surface to be polished of a resin spectacle lens; and
a step of polishing the surface to be polished by bringing the surface to be polished into contact with the polishing surface by applying pressure and relatively moving the polishing pad and the spectacle lens while supplying a coolant to the polishing surface.

2. The method for polishing the spectacle lens according to Claim 1, wherein, in the step of preparing the polishing pad, the polishing pad provided with the flocking polishing sheet is prepared on a base material containing an elastic material.

3. The method for polishing the spectacle lens according to Claim 1 or 2, wherein, in the polishing step, the polishing pad and the spectacle lens are relatively moved so that the abrasive grains swing in a direction parallel to the polishing surface and a direction intersecting with the polishing surface.

4. The method for polishing the spectacle lens according to any one of Claims 1 to 3, wherein, in the polishing step, a slurry containing abrasive grains is not supplied to the polishing surface.

5. The method for polishing the spectacle lens according to any one of Claims 1 to 4, wherein, in the polishing step, a temperature of the coolant is controlled to be 20 degrees or lower.

6. The method for polishing the spectacle lens according to any one of Claims 1 to 5, wherein, in the step of preparing the polishing pad, a polishing pad provided with a flocking polishing sheet having abrasive grains having an average grain diameter of 0.5 um or more and 5 um or less is prepared.

7. A method for manufacturing a spectacle lens comprising:
a step of preparing a polishing pad provided with a flocking polishing sheet having a flocking part and abrasive grains that are attached to a surface of the flocking part on a polishing surface that comes into contact with a surface to be polished of a resin spectacle lens; and
a step of polishing the surface to be polished by bringing the surface to be polished into contact with the polishing surface by applying pressure and relatively moving the polishing pad and the spectacle lens while supplying a coolant to the polishing surface.
